# EUROPEAN PATENT APPLICATION

(11) **EP 4 742 744 A1**
(43) Date of publication of application: **13.05.2026**
(21) Application number: 24848065.9
(22) Date of filing: 22.07.2024
(51) Int. Cl.: H04W 28/18

(54) **TRANSMISSION METHOD AND TRANSMISSION APPARATUS**

(30) Priority: 31.07.2023 CN 202310962470
(71) Applicant: Huawei Technologies Co., Ltd., Shenzhen, Guangdong 518129 (CN)
(72) Inventor: LI, Bingzhao, Shenzhen, Guangdong 518129 (CN); CHANG, Junren, Shenzhen, Guangdong 518129 (CN); QIANG, Li, Shenzhen, Guangdong 518129 (CN); LIU, Nannan, Shenzhen, Guangdong 518129 (CN)
(74) Representative: MERH-IP Matias Erny Reichl Hoffmann Patentanwälte PartG mbB
(86) International application number: PCT/CN2024/106695
(87) International publication number: WO 2025/026107

(57) **Abstract**

This application provides a transmission method and a transmission apparatus, so that a request message can be initiated when a target service arrives, thereby reducing overheads of reserving a resource in advance before the service arrives, and ensuring a transmission rate of the target service. The method includes: A terminal device sends a request message to an access network device, where the request message is used to request a processing capability for transmission of a target service; the terminal device receives a resource response message from the access network device, where the resource response message indicates second data volume information, and the second data volume information indicates a processing capability supported by the access network device for transmission of the target service within a first latency; and the terminal device sends data of the target service to the access network device based on the second data volume information.

## Description

This application claims priority to Chinese Patent Application No. 202310962470.5, filed with the China National Intellectual Property Administration on July 31, 2023 and entitled "TRANSMISSION METHOD AND TRANSMISSION APPARATUS", which is incorporated herein by reference in its entirety.

### TECHNICAL FIELD

This application relates to the communication field, and more specifically, to a transmission method and a transmission apparatus.

### BACKGROUND

In a 5th generation mobile communication technology (5th generation, 5G) quality of service (quality of service, QoS) flow (flow), for example, if a terminal device needs to upload a photo to a server for a picture enhancement service, the file transfer protocol (file transfer protocol, FTP) is usually used for picture uploading.

However, in a cloud-based photo enhancement scenario, generally, if a cloud-based photo needs to achieve experience equivalent to that of a local image, about 2 seconds are needed to complete uplink transmission of the photo. A base station does not have strict transmission resource assurance, and there is no fixed constraint on a latency of transmitting a photo. Therefore, a transmission resource cannot be ensured, and an experience requirement cannot be met.

### SUMMARY

Embodiments of this application provide a transmission method and a transmission apparatus, to ensure a transmission rate of a target service, thereby meeting a customer experience requirement.

To achieve the foregoing objective, this application uses the following technical solutions.

According to a first aspect, a transmission method is provided. The method may be performed by a terminal device; or may be performed by a component of the terminal device, for example, a processor, a chip, or a chip system of the terminal device; or may be implemented by a logic module or software that can implement all or some functions of the terminal device. For example, the method may be performed by a terminal device. The method includes: The terminal device sends a request message to an access network device, where the request message is used to request a processing capability for transmission of a target service; the terminal device receives a resource response message from the access network device, where the resource response message indicates second data volume information, the second data volume information indicates a processing capability supported by the access network device for transmission of the target service within a first latency, and the processing capability is a data volume or a data transmission rate; and the terminal device sends data of the target service to the access network device based on the second data volume information.

According to the transmission method provided in this embodiment of this application, when the target service arrives, the terminal device requests the processing capability for transmission of the target service. Further, the access network device may feed back, to the terminal device, the second data volume information indicating the processing capability supported by the access network device for transmission of the target service within the first latency, so that the terminal device sends the data of the target service to the access network device based on the second data volume information. Because this solution is initiated when the target service arrives, overheads of reserving a resource in advance before the service arrives are reduced. In addition, because the terminal device sends the data of the target service based on the second data volume information fed back by the access network device, this solution can ensure a transmission rate of the target service.

The second data volume information is determined based on first data volume information, and the first data volume information indicates a processing capability for the target service requested to be transmitted within the first latency.

In this embodiment of this application, the processing capability for the target service is a data volume or a data transmission rate for the target service allowed by the access network device to be transmitted within the first latency. The data volume for the target service allowed by the access network device to be transmitted within the first latency may be understood as a volume of data that can be received/processed by the access network device within a specific time. The data transmission rate for the target service allowed by the access network device to be transmitted within the first latency may be understood as a specific data transmission rate at which the access network device can receive/process the data of the target service. It should be noted that the data volume is a data volume that is estimated by the access network device based on a current channel status and load status of the terminal device and that can be transmitted within a first latency requirement. After the service actually arrives subsequently, the access network device may still schedule a data volume for the target service in a case of being less than the first latency or greater than the first latency. Alternatively, the data transmission rate is estimated by the access network device based on a current channel status and load status of the terminal device, and the data of the target service can be transmitted at a specific data transmission rate. After the service actually arrives subsequently, the access network device may still transmit the data of the target service at a transmission rate lower than or higher than the data transmission rate. In addition, the first latency may be referred to as a first duration, a first time period, a first time interval, or the like. This is not limited in this application.

In a possible implementation, the request message in this embodiment of this application further includes estimated time of arrival information of the target service. In a possible implementation, the estimated time of arrival information of the target service indicates that an estimated time of arrival of the target service is a time difference between a time at which the data actually arrives at an access stratum of the terminal device and a time at which the terminal device sends the request message, and the request message includes the estimated time of arrival of the target service, so that the processing capability that is determined by the access network device and used to transmit the target service is more accurate, thereby reducing resource overheads.

For the first data volume information:
In a possible implementation, the request message in this embodiment of this application includes first data volume information and indication information of the first latency, and the first data volume information indicates a processing capability for the target service that the terminal device requests to transmit within the first latency. The first data volume information indicates the processing capability for the target service that the terminal device requests to transmit within the first latency. To be specific, when the target service arrives, the terminal device may directly include the first data volume information and the indication information of the first latency in the request message, to request the processing capability used to transmit the target service.

In another possible implementation, the first data volume information indicates a processing capability for the target service that a core network device indicates to transmit within the first latency. The first data volume information indicates the processing capability for the target service that the core network device indicates to transmit within the first latency. That is, when the target service arrives, new establishment of the QoS flow is triggered. In a QoS flow establishment request, the core network device sends, to the access network device, parameters used to establish the QoS flow: the first data volume information and the indication information of the first latency, so that the access network device establishes, based on the first data volume information and the indication information of the first latency, the QoS flow dedicated to the target service.

For the resource response messages:
In a possible implementation, the resource response message includes the second data volume information, so that the terminal device directly obtains the second data volume information without determining, and sends the data of the target service to the access network device based on the second data volume information. In this way, the terminal device does not need an additional determining step, and implementation complexity is low.

In another possible implementation, the resource response message does not carry data volume information, and the second data volume information indicated by the resource response message is the first data volume information indicated by a first configuration message; and/or the resource response message does not carry data volume information, and the second data volume information indicated by the resource response message is the first data volume information indicated by a second configuration message. In other words, in this solution, the terminal device obtains the second data volume information through determining of the terminal device, and sends the data of the target service to the access network device based on the second data volume information. Because the terminal device determines that the second data volume information indicated by the resource response message is the first data volume information indicated by the first configuration message or the second configuration message, the resource response message needs to carry only one indication, so that the terminal device can determine the second data volume information. Therefore, resource overheads of the resource response message are further reduced.

In a possible implementation, the method further includes: The terminal device receives a first configuration message from the access network device, where the first configuration message includes a first initial transmission rate and/or the first data volume information, the first configuration message indicates to establish a data bearer of a quality of service QoS flow carrying the target service, and the first initial transmission rate indicates an initial rate at which data of the target service is sent to the access network device.

In addition/Alternatively, the terminal device receives a second configuration message from the core network device, where the second configuration message includes the first data volume information, and the second configuration message indicates to establish a QoS flow carrying the target service. In this way, the terminal device determines related information of the QoS flow used for transmitting the target service, and then initiates the request message used to request the processing capability for the target service.

In a possible implementation, the method further includes: The terminal device sends a first request message to a core network device, where the first request message includes the first data volume information and indication information of the first latency, or the first request message includes third data volume information and indication information of the first latency; and the third data volume information is used by the access network device to determine the first data volume information, and the first request message is used to request to configure a QoS flow. In other words, the core network device determines, based on the first request message received from the terminal device, to request to establish the QoS flow that carries the target service. The first request message may include the first data volume information and the indication information of the first latency, or may include the third data volume information and the indication information of the first latency. When the first request message includes the first data volume information and the indication information of the first latency, the access network device does not need to perform capability determining, and directly establishes, based on the request of the core network device, the QoS flow that carries the target service. The QoS flow that carries the target service is corresponding to the first data volume information, so that the access network device does not need to perform additional determining. When the first request message includes the third data volume information and the indication information of the first latency, the access network device performs determining based on a capability of the access network device, and establishes, based on the request of the core network device for requesting to establish the QoS flow carrying the target service and a capability of the access network device, the QoS flow carrying the target service. The QoS flow carrying the target service is corresponding to the first data volume information, so that the second data volume information determined by the access network device is more accurate.

In a possible implementation, the resource response message further includes a second initial transmission rate, and the method further includes: The terminal device determines a send window of an application transmission protocol of the data of the target service based on the second initial transmission rate. The resource response message includes the second initial transmission rate, so that the terminal device can send the data of the target service to the access network device based on the initial transmission rate, thereby reducing overheads of attempting to determine a transmission rate by the terminal device for a plurality of times.

In a possible implementation, that the terminal device sends the data of the target service to the access network device based on the second data volume information includes: When a data volume indicated by the second data volume information is greater than or equal to a first threshold, the terminal device sends the data of the target service to the access network device based on the parameter of the target service.

In a possible implementation, when a data volume indicated by the second data volume information is less than a first threshold, the terminal device does not send the data of the target service to the access network device. When the data volume indicated by the second data volume information cannot be a data volume for transmitting the target service, the terminal device does not send the data of the target service to the access network device, to prevent the terminal device from performing invalid transmission, thereby reducing resource overheads.

According to a second aspect, a transmission method is provided. The method may be performed by an access network device; or may be performed by a component of the access network device, for example, a processor, a chip, or a chip system of the access network device; or may be implemented by a logic module or software that can implement all or some functions of the access network device. For example, the method may be performed by an access network device. The method includes: The access network device receives a request message from a terminal device, where the request message is used to request a processing capability for transmission of a target service; and the access network device sends a resource response message to the terminal device, where the resource response message indicates second data volume information, the second data volume information indicates a processing capability supported by the access network device for transmission of the target service within a first latency, and the processing capability is a data volume or a data transmission rate.

According to the transmission method provided in this embodiment of this application, when the target service arrives, the terminal device requests the processing capability for transmission of the target service. Further, the access network device may feed back, to the terminal device, the second data volume information indicating the processing capability supported by the access network device for transmission of the target service within the first latency, so that the terminal device sends the data of the target service to the access network device based on the second data volume information. Because this solution is initiated when the target service arrives, overheads of reserving a resource in advance before the service arrives are reduced. In addition, because the terminal device sends the data of the target service based on the second data volume information fed back by the access network device, this solution can ensure a transmission rate of the target service.

In this embodiment of this application, the second data volume information is determined based on first data volume information, and the first data volume information indicates a processing capability for the target service requested to be transmitted within the first latency.

In this embodiment of this application, the processing capability for the target service is a data volume or a data transmission rate for the target service allowed by the access network device to be transmitted within the first latency. The data volume for the target service allowed by the access network device to be transmitted within the first latency may be understood as a volume of data that can be received/processed by the access network device within a specific time. The data transmission rate for the target service allowed by the access network device to be transmitted within the first latency may be understood as a specific data transmission rate at which the access network device can receive/process the data of the target service. It should be noted that the data volume is a data volume that is estimated by the access network device based on a current channel status and load status of the terminal device and that can be transmitted within a first latency requirement. After the service actually arrives subsequently, the access network device may still schedule a data volume for the target service in a case of being less than the first latency or greater than the first latency. Alternatively, the data transmission rate is estimated by the access network device based on a current channel status and load status of the terminal device, and the data of the target service can be transmitted at a specific data transmission rate. After the service actually arrives subsequently, the access network device may still transmit the data of the target service at a transmission rate lower than or higher than the data transmission rate. In addition, the first latency may be referred to as a first duration, a first time period, a first time interval, or the like. This is not limited in this application.

In this embodiment of this application, the request message further includes estimated time of arrival information of the target service. In a possible implementation, the estimated time of arrival information of the target service indicates that an estimated time of arrival of the target service is a time difference between a time at which the data actually arrives at an access stratum of the terminal device and a time at which the terminal device sends the request message, and the request message includes the estimated time of arrival of the target service, so that the processing capability that is determined by the access network device and used to transmit the target service is more accurate, thereby reducing resource overheads.

For the first data volume information:
In a possible implementation, the request message includes first data volume information and indication information of the first latency, and the first data volume information indicates a processing capability for the target service that the terminal device requests to transmit within the first latency. The first data volume information indicates the processing capability for the target service that the terminal device requests to transmit within the first latency. To be specific, when the target service arrives, the terminal device may directly include the first data volume information and the indication information of the first latency in the request message, to request the processing capability used to transmit the target service.

In another possible implementation, the first data volume information indicates a processing capability for the target service that a core network device indicates to transmit within the first latency. The first data volume information indicates the processing capability for the target service that the core network device indicates to transmit within the first latency. That is, when the target service arrives, new establishment of the QoS flow is triggered. In a QoS flow establishment request, the core network device sends, to the access network device, parameters used to establish the QoS flow: the first data volume information and the indication information of the first latency, so that the access network device establishes, based on the first data volume information and the indication information of the first latency, the QoS flow dedicated to the target service.

For the resource response messages:
In a possible implementation, the resource response message includes the second data volume information, so that the terminal device directly obtains the second data volume information without determining, and sends the data of the target service to the access network device based on the second data volume information. The terminal device does not need an additional determining step, and implementation complexity is low.

In another possible implementation, the resource response message does not carry data volume information, and the second data volume information indicated by the resource response message is the first data volume indicated by a first configuration message; and/or the resource response message does not carry data volume information, and the second data volume information indicated by the resource response message is the first data volume information indicated by a second configuration message. In other words, in this solution, the terminal device obtains the second data volume information through determining of the terminal device, and sends the data of the target service to the access network device based on the second data volume information. Because the terminal device determines that the second data volume information indicated by the resource response message is the first data volume indicated by the first configuration message or the second configuration message, the resource response message needs to carry only one indication, so that the terminal device can determine the second data volume information. Therefore, resource overheads of the resource response message are further reduced.

In a possible implementation, the method further includes: The access network device receives the first data volume information and indication information of the first latency from the core network device, where the first data volume information is from the terminal device or a server; or the access network device receives third data volume information and indication information of the first latency from the core network device, and determines the first data volume information based on the third data volume information, where the third data volume information is from the terminal device or the server. When the access network device receives the first data volume information and the indication information of the first latency from the core network device, the access network device does not need to perform capability determining, and directly establishes, based on the request of the core network device, the QoS flow that carries the target service. The QoS flow that carries the target service is corresponding to the first data volume information, so that the access network device does not need to perform additional determining. When the access network device receives the third data volume information and the indication information of the first latency from the core network device, the access network device performs determining based on a capability of the access network device, and establishes, based on the request of the core network device for requesting to establish the QoS flow carrying the target service and a capability of the access network device, the QoS flow carrying the target service. The QoS flow carrying the target service is corresponding to the first data volume information, so that the second data volume information determined by the access network device is more accurate. The first data volume information and the indication information of the first latency, or the third data volume information and the indication information of the first latency may be obtained by the core network device from the terminal device or the server, so that the core network device sends, based on a request of the server or the terminal device, a request for establishing a bearer QoS flow.

In a possible implementation, the method further includes: The access network device sends the first data volume information to the core network device. In this way, the access network device and the core network device align information about the QoS flow used for the target service.

In a possible implementation, the method further includes: The access network device sends a first configuration message to the terminal device, where the first configuration message includes a first initial transmission rate or the first data volume information, and the first configuration message indicates to establish a data bearer of a quality of service QoS flow carrying the target service. In this way, the terminal device determines related information of the QoS flow used for transmitting the target service, and then initiates the request message used to request the processing capability for the target service.

In a possible implementation, the method further includes: The resource response message includes a second initial transmission rate, and the second initial transmission rate is used to determine a send window of an application transmission protocol of the data of the target service. The resource response message includes the second initial transmission rate, so that the terminal device can send the data of the target service to the access network device based on the initial transmission rate, thereby reducing overheads of attempting to determine a transmission rate by the terminal device for a plurality of times.

In a possible implementation, the method further includes: The access network device receives the data of the target service from the terminal device, where the data of the target service is sent by the terminal device based on a parameter of the target service when a data volume indicated by the second data volume information is greater than or equal to a first threshold, and the parameter of the target service is determined by the terminal device based on the second data volume information indicated by the resource response message.

When the data volume indicated by the second data volume information cannot be a data volume for transmitting the target service, the terminal device does not send the data of the target service to the access network device, to prevent the terminal device from performing invalid transmission, thereby reducing resource overheads.

According to a third aspect, a communication apparatus is provided, to implement the foregoing methods. The communication apparatus may be the network device in the first aspect, or an apparatus such as a chip included in the terminal device; or the communication apparatus may be the access network device in the second aspect, or an apparatus such as a chip included in the access network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and any possible design of the foregoing aspects. The processing module may be configured to implement a processing function in any one of the foregoing aspects and any possible design of the foregoing aspects.

Optionally, the communication apparatus further includes a storage module, configured to store program instructions and data.

According to a fourth aspect, a communication apparatus is provided, including at least one processor. The processor is configured to run a computer program or instructions, or is configured to use a logic circuit, to enable the communication apparatus to perform the method according to any one of the foregoing aspects. The communication apparatus may be the terminal device in the first aspect, or an apparatus such as a chip included in the terminal device; or the communication apparatus may be the access network device in the second aspect, or an apparatus such as a chip included in the access network device.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may include a chip, or may include a chip and another discrete component.

According to a fifth aspect, a communication apparatus is provided, including a logic circuit and an interface circuit. The interface circuit is configured to input information and/or output information. The logic circuit is configured to perform the method in any one of the foregoing aspects, and perform processing and/or generate to-be-output information based on the input information. The communication apparatus may be the terminal device in the first aspect, or an apparatus such as a chip included in the terminal device; or the communication apparatus may be the access network device in the second aspect, or an apparatus such as a chip included in the access network device.

It may be understood that when the communication apparatus provided in any one of the third aspect to the fifth aspect is a chip, the foregoing sending action/function may be understood as outputting information, and the foregoing receiving action/function may be understood as inputting information.

According to a sixth aspect, a computer-readable storage medium is provided. The computer-readable storage medium stores a computer program or instructions; and when the computer program or the instructions are executed by a processor, the method in any one of the foregoing aspects is performed.

According to a seventh aspect, a computer program product is provided. When the computer program product is executed by a processor, the method in any one of the foregoing aspects is performed.

According to an eighth aspect, a communication apparatus is provided. The communication apparatus includes modules/units configured to perform the method according to the first aspect or the second aspect.

According to a ninth aspect, a communication system is provided. The communication system includes the terminal device in the first aspect and the access network device in the second aspect. Optionally, the communication system further includes a core network device.

For technical effects brought by any design in the third aspect to the ninth aspect, refer to technical effects brought by different designs of the first aspect or the second aspect. Details are not described herein again.

### BRIEF DESCRIPTION OF DRAWINGS

FIG. 1 is a diagram of a 5G network architecture according to an embodiment of this application;
FIG. 2 is a diagram of a QoS flow establishment procedure according to an embodiment of this application;
FIG. 3 is a diagram of a system architecture according to an embodiment of this application;
FIG. 4 is a diagram of a structure of a communication apparatus according to an embodiment of this application;
FIG. 5 is a diagram of an example of a transmission method according to an embodiment of this application;
FIG. 6 is a diagram of another example of a transmission method according to an embodiment of this application;
FIG. 7 is a diagram of another example of a transmission method according to an embodiment of this application;
FIG. 8 is a diagram of internal interaction of a terminal device according to an embodiment of this application;
FIG. 9 is a diagram of internal interaction of a terminal device according to an embodiment of this application;
FIG. 10 is a diagram of another example of a transmission method according to an embodiment of this application; and
FIG. 11 is a diagram of an example of a communication apparatus according to an embodiment of this application.

### DESCRIPTION OF EMBODIMENTS

In the descriptions of this application, unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural.

In the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c, where a, b, and c may be singular or plural.

In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner. It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of the embodiments, refer to each other. In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. The following implementations of this application are not intended to limit the protection scope of this application.

For ease of understanding of technical solutions in embodiments of this application, the following first briefly describes technologies and terms related to this application.

### 1. 5G network architecture:

A 5G network architecture defined in the 3rd generation partnership project (3rd generation partnership project, 3GPP) TS 23.501 standard is mainly divided into two parts: an access network (access network, AN) and a core network.

The access network may include a radio access network (radio access network, RAN) device, and is configured to implement a function related to radio access.

The core network mainly includes the following several key logical network elements: an access and mobility management function (access and mobility management function, AMF) network element, a session management function (session management function, SMF) network element, a user plane function (user plane function, UPF) network element, a policy control function (policy control function) network element, and a unified data management (unified data management, UDM) network element. In addition, the core network may further include an authentication server function (authentication server function, AUSF) network element, a network slice selection function (network slice selection function, NSSF) network element, an application function (application function, AF) network element, and the like.

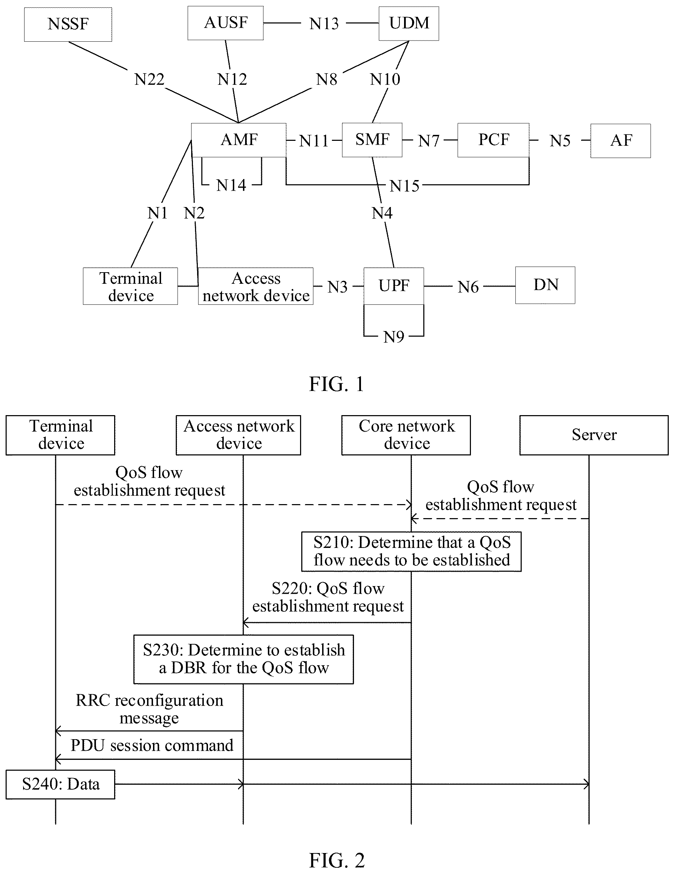

FIG. 1 is a diagram of a 5G network architecture. A terminal device may be user equipment (user equipment, UE), for example, a mobile phone or an internet of things terminal device.

A DN is a data network (data network, DN), and is mainly used to provide a user with a data transmission service, for example, an internet protocol (internet protocol, IP) multimedia service (IP Multimedia Service, IMS).

Access network devices that provide radio access for the user is deployed in the RAN, and include but are not limited to an evolved NodeB (NodeB, eNB, or e-NodeB, evolved NodeB), a wireless fidelity (wireless fidelity, Wi-Fi) access point (access point, AP), and the like.

The AMF network element is mainly responsible for mobility management in a mobile network, such as user location update, user network registration, and user switching.

The SMF network element is mainly responsible for session management in a mobile network, for example, session establishment, modification, and release. Specific functions are, for example, allocating an IP address to the user and selecting a UPF that provides a packet forwarding function.

The PCF network element is mainly responsible for providing policies such as a quality of service (quality of service, QoS) policy and a slice selection policy for the AMF and the SMF.

The UDM network element is mainly responsible for storing user data such as subscription information and authentication/authorization information.

The AF network element is mainly responsible for providing service requirements for a 3GPP network, for example, affecting a service route and interacting with the PCF network element to perform policy control.

The UPF network element is mainly responsible for user packet processing, for example, forwarding and charging.

The terminal device accesses the DN by establishing a protocol data unit (Protocol data unit, PDU) session (PDU session) from the terminal device to the RAN, the UPF, and the DN.

The AUSF network element is mainly responsible for providing a terminal device authentication service for the AMF network element.

The NSSF network element is mainly responsible for selecting a network slice that serves the terminal device.

In addition, refer to FIG. 1. Nx represents a logical interface or a service-based interface between two network elements, and is used for communication between the network elements. For example, N1 is an interface between the terminal device and the AMF network element. N2 is an interface between the access network device and the AMF network element. N3 is an interface between the access network device and the UPF network element. N9 is an interface between different UPF network elements. N6 is an interface between the UPF network element and the DN. N4 is an interface between the UPF network element and the SMF network element. N11 is an interface between the AMF network element and the SMF network element. N7 is an interface between the SMF network element and the PCF network element. N5 is an interface between the PCF network element and the AF network element. N14 is an interface between different AMF network elements. N15 is an interface between the AMF network element and the PCF network element. N22 is an interface between the NSSF network element and the AMF network element. N12 is an interface between the AUSF network element and the AMF network element. N8 is an interface between the UDM network element and the AMF network element. N13 is an interface between the AUSF network element and the UDM network element.

### 2. 5G QoS flow

In a 5G QoS framework, various services are mapped to QoS flows according to a specific rule. After the QoS flow reaches a RAN device, the RAN device maps the QoS flow to a user data bearer ((user) data radio bearer, DRB) for transmission.

### 2.1. QoS flow parameter

Main parameters of a QoS flow include the following:
a 5G quality of service identifier (5G QoS identifier, 5QI), an address resolution protocol (address resolution protocol, ARP), a guaranteed flow bit rate (guaranteed flow bit rate, GFBR) {for a GBR-type QoS flow}, a maximum flow bit rate (maximum flow bit rate, MFBR) {for a GBR-type QoS flow}, a session-aggregate maximum bit rate (session-aggregate maximum bit rate, Session-AMBR) {for a non-GBR-type QoS flow}, and a terminal device UE-AMBR {for a non-GBR-type QoS flow}. Session-AMBR is a maximum bandwidth shared by all non-GBR QoS flows of a PDU session, and is controlled by a UPF network element and a terminal device for execution. UE-AMBR is a maximum bandwidth shared by all non-GBR QoS flows of a terminal device, and is controlled by a RAN device for execution.

The 5QI includes the following features: a resource type: GBR, non-GBR, or critical delay critical GBR; a priority; a delay budget; a packet error loss rate; a maximum data burst volume (maximum data burst volume, MDBV) (applicable to a delay critical GBR service); and an average window size (applicable to some GBR services).

The GBR type is usually used for a streaming media service, has a stable rate, has a requirement on a latency, and can tolerate a packet loss to some extent. Generally, after a GRB service is admitted, a network reserves a corresponding resource according to a rate requirement of the GRB service to ensure a transmission rate of a terminal device.

The non-GBR type is usually used for services such as web page browsing and file transfer protocol (file transfer protocol, FTP) downloading, has no fixed service rate requirement, is not particularly sensitive to a latency, but has a relatively high requirement on a packet loss. The network provides a transmission rate of a terminal device in a best-effort scheduling mode in addition to reserving a resource in GBR.

### 2.2. QoS flow configuration procedure.

FIG. 2 is a diagram of a QoS flow establishment procedure. As shown in FIG. 2, the QoS flow establishment procedure includes the following steps.

S210: A core network device determines that a QoS flow needs to be established.

As shown in FIG. 2, in a possible implementation, the core network device receives a QoS flow establishment request sent by a terminal device, and determines to establish the QoS flow.

Alternatively, as shown in FIG. 2, in another possible implementation, the core network device receives a QoS flow establishment request sent by a server, and determines to establish the QoS flow.

In another possible implementation, the core network device determines, based on downlink data, to establish the QoS flow.

S220: The core network device sends a QoS flow establishment request to an access network device. Correspondingly, the access network device receives the QoS flow establishment request from the core network device.

The QoS flow establishment request includes parameters such as a 5QI, a GFBR, and an MFBR.

S230: The access network device determines to establish a DBR for the QoS flow.

After establishing the DBR for the QoS flow, the access network device may send a correspondence between a QoS flow of uplink data and a DBR to the terminal device by using a radio resource control (radio resource control, RRC) reconfiguration message.

A correspondence between a QoS flow of downlink data and a DBR is determined and used by the access network device.

The core network device may send a PDU session command to the terminal device. The PDU session command may include parameters such as a 5QI, a GFBR, an MFBR, and a data packet filtering rule of the QoS flow. The data packet filtering rule is a mapping rule between a data packet and a QoS flow.

S240: The terminal device sends data.

The terminal device may send the data to the access network device, or may send the data to the server.

Specifically, the terminal device distributes a data packet to a corresponding QoS flow according to the data packet filtering rule, and then sends data of the corresponding QoS flow to the access network device or the server by using a corresponding DBR.

### 3. Cloud-based photo enhancement principle

Generally, after a terminal device takes a photo locally, the terminal device performs image processing locally to meet a requirement for enhancing picture quality. Common image post-processing technologies include: denoising, super-resolution, dark enhancement, facial beautification, and the like. Some of such processing requires relatively high computing power. The terminal device is limited by a processing capability of the terminal device during local processing, and it is difficult to improve processing quality after the processing quality reaches a specific level.

To meet the requirement for enhancing picture quality, one manner is that the terminal device transmits the photo to a cloud for processing. A large quantity of graphics processing units (graphics processing unit, GPU) may be deployed on the cloud for image processing. In this way, picture quality after processing is better than that of a local picture. A specific procedure may be as follows: After taking a photo, the terminal device uploads the photo to the cloud, and the cloud processes the photo, and then returns the photo to the terminal device for local display.

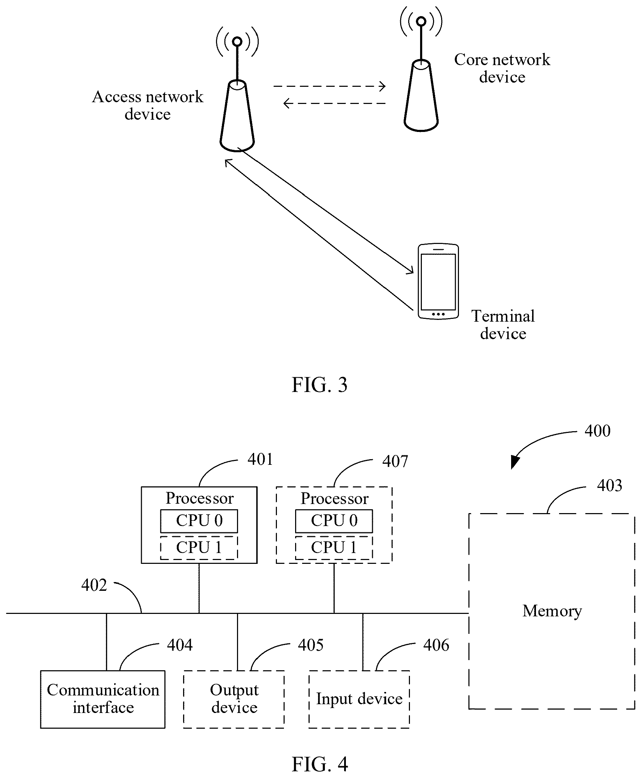

FIG. 3 is a diagram of a system architecture according to an embodiment of this application. As shown in FIG. 3, the communication system mainly includes a terminal device and an access network device. Optionally, the communication system may include a core network device.

The access network device is an entity that transmits or receives a signal, and is configured to communicate with the terminal device and a core network.

The terminal device is an entity that receives or transmits a signal, and is configured to perform wireless communication with a base station.

The core network device is configured to communicate with the terminal device through the access network device.

Optionally, embodiments of this application may be applied to a 5G system, or may be applied to another communication system, for example, a future 6th generation mobile communication technology (6th generation, 6G). This is not specifically limited in embodiments of this application.

Optionally, the terminal device in this application may be user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a computing device or another processing device connected to a wireless modem, an in-vehicle device, an in-vehicle transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a drone, a robot, a smart point of sale (point of sale, POS) terminal, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the internet of things (internet of things, IoT), for example, a terminal in V2X (for example, an internet of vehicles device), a terminal in D2D communication, or a terminal in M2M communication. The terminal may be movable or fixed.

Optionally, the access network device in this application may be a device configured to communicate with a terminal device, for example, may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the access network device may include a next generation NodeB (next generation NodeB, gNB) in a new radio (new radio, NR) system. Alternatively, the access network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the access network device may include a base station in a non-terrestrial network (non-terrestrial network, NTN), that is, may be deployed on an airplane platform or a satellite. In the NTN, a network device or an access device may be used as a layer 1 (L1) relay (relay), may be used as a base station, or may be used as an integrated access and backhaul (integrated access and backhaul, IAB) node. Alternatively, the network device or the access device may be a device that implements functions of a base station in IoT, for example, a device that implements the functions of the base station in uncrewed aerial vehicle communication, V2X, D2D, or machine-to-machine (machine-to-machine, M2M).

In some possible scenarios, the access network device may alternatively be a module or unit that can implement some functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the access network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of the software module and the hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

Optionally, the core network device in this application may include, for example, the AMF network element, the SMF network element, the UPF network element, or the UDM network element in the foregoing 5G system. For a function of a related network element, refer to the descriptions of the 5G system. Details are not described herein again.

It should be noted that the communication system described in embodiments of this application is intended to describe the technical solutions in embodiments of this application more clearly, and does not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

Optionally, functions related to the terminal device, the access network device, or the core network device in this application may be implemented by one device, may be jointly implemented by a plurality of devices, may be implemented by one or more functional modules in one device, may be one or more chips, or may be a system on chip (system on chip, SoC) or a chip system. The chip system may include a chip, or may include a chip and another discrete component. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

For example, the functions related to the terminal device, the access network device, or the core network device in this application may be implemented by a communication device 400 in FIG. 4. FIG. 4 is a diagram of a structure of a communication device 400 according to an embodiment of this application. The communication device 400 includes one or more processors 401, a communication line 402, and at least one communication interface (where in FIG. 4, only an example in which a communication interface 404 and one processor 401 are included is used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 402 may include a path for connecting different components.

The communication interface 404 may be a transceiver module configured to communicate with another device or a communication network, for example, an Ethernet, a RAN, or a wireless local area network (wireless local area network, WLAN). For example, the transceiver module may be an apparatus such as a transceiver or a transceiver machine. Optionally, the communication interface 404 may alternatively be a transceiver circuit located in the processor 401, configured to implement signal input and signal output of the processor.

The memory 403 may be an apparatus having a storage function. For example, the memory may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement a transmission method provided in embodiments of this application.

Alternatively, optionally, in embodiments of this application, the processor 401 may perform a processing-related function in a transmission method provided in the following embodiments of this application, and the communication interface 404 is responsible for communicating with another device or a communication network. This is not specifically limited in embodiments of this application.

Optionally, the computer-executable instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 4.

During specific implementation, in an embodiment, the communication device 400 may include a plurality of processors, for example, the processor 401 and a processor 407 in FIG. 4. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light-emitting diode (light-emitting diode, LED) display device, a cathode ray tube (cathode ray tube, CRT) display device, or a projector (projector). The input device 406 communicates with the processor 401, and may receive an input from a user in a plurality of manners. For example, the input device 406 may be a mouse, a keyboard, a touchscreen device, a sensing device, or the like.

The communication device 400 may also be referred to as a communication apparatus sometimes, and may be a general-purpose device or a dedicated device. For example, the communication device 400 may be a desktop computer, a portable computer, a network server, a palmtop computer (personal digital assistant, PDA), a mobile phone, a tablet computer, a wireless terminal device, an embedded device, the foregoing terminal, the foregoing network device, or a device having a structure similar to that in FIG. 4. A type of the communication device 400 is not limited in this embodiment of this application.

In addition, the composition structure shown in FIG. 4 does not constitute a limitation on the communication apparatus. In addition to the parts shown in FIG. 4, the communication apparatus may include more or fewer parts than those shown in the figure, or some parts may be combined, or different part arrangements may be used.

The following describes the transmission method provided in embodiments of this application with reference to the communication system shown in FIG. 3.

It should be noted that in the following embodiments of this application, a name of a message between network elements, a name of each parameter, a name of each piece of information, or the like is merely an example, and may be another name in another embodiment. This is not specifically limited in the method provided in this application.

It may be understood that in embodiments of this application, each network element may perform some or all of the steps in embodiments of this application, and these steps or operations are merely examples. In embodiments of this application, another operation or various operation variants may further be performed. In addition, the steps may be performed in a sequence different from a sequence presented in embodiments of this application, and not all the operations in embodiments of this application may be performed.

In a possible implementation, a terminal device is configured to send a request message to an access network device, where the request message is used to request a processing capability for transmission of a target service. The access network device is configured to receive the request message from the terminal device, and send a resource response message to the terminal device, where the resource response message indicates second data volume information, the second data volume information indicates a processing capability supported by the access network device for transmission of the target service within a first latency, and the processing capability includes a data volume or a data transmission rate. The terminal device is configured to receive the resource response message from the access network device, and send data of the target service to the access network device based on the second data volume information. The following describes the solution in detail with reference to several specific embodiments.

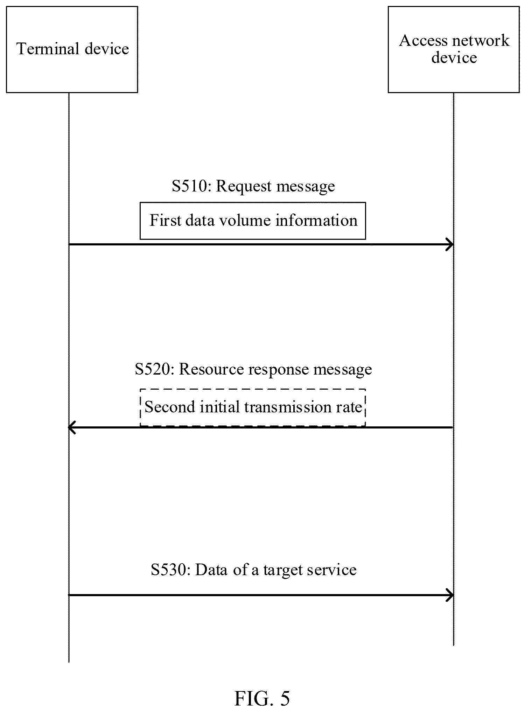

FIG. 5 is a diagram of an example of a transmission method according to an embodiment of this application. The method is described by using interaction between a terminal device and an access network device as an example. Certainly, an action of the terminal device in the method may alternatively be performed by an apparatus/module in the terminal device, for example, a chip, a processor, or a processing unit in the terminal device. An action of the access network device in the method may alternatively be performed by an apparatus/module in the access network device, for example, a chip, a processor, or a processing unit in the access network device. This is not specifically limited in this embodiment of this application. For example, as shown in FIG. 5, the transmission method includes the following steps.

S510: The terminal device sends a request message to the access network device. Correspondingly, the access network device receives the request message from the terminal device.

In this embodiment of this application, the request message is used to request a processing capability for transmission of a target service.

For example, the target service in this embodiment of this application may be a cloud-based photo transmission service.

In this embodiment of this application, the processing capability includes a data volume or a data transmission rate.

In this embodiment of this application, the request message includes first data volume information and indication information of a first latency. The first data volume information indicates a processing capability for the target service that the terminal device requests to transmit within the first latency.

Optionally, the data volume in this embodiment of this application, for example, a data volume of the target service, may be a data volume range, or may be a specific data volume value. In this embodiment of this application, the data transmission rate indicates a data rate (a volume of data transmitted per second). This is uniformly described herein, and is not limited in this application.

In a possible implementation, the first data volume information indicates a data volume of the target service that the terminal device requests to transmit within the first latency.

For example, the data volume indicated by the first data volume information may be 30 Mbits to 300 Mbits, or the data volume indicated by the first data volume information may be 100 Mbits.

Optionally, the latency in this embodiment of this application, for example, the first latency, indicates a time consumed for transmitting data, of the target service, with a specific data volume.

For example, the first latency is 2s, indicating that a time consumed for transmitting 100-Mbit data of the target service is 2s.

In another possible implementation, the first data volume information indicates a data transmission rate for the target service that the terminal device requests to transmit within the first latency, that is, a product of the data transmission rate and the first latency represents a volume of data that the terminal device requests to transmit within the first latency.

Optionally, the data transmission rate in this embodiment of this application may indicate a volume of data transmitted per second, for example, 50 Mbits/second (bits per second, BPS).

Optionally, the latency in this embodiment of this application, for example, the first latency, indicates a time for transmitting the data of the target service at a specific rate.

For example, the first latency is 2s, indicating that the data volume indicated by the first data volume information is transmitted at a rate of 50 Mbps within 2s, and the data volume indicated by the first data volume information is 100 Mbits.

In other words, in this implementation, content indicated by the first data volume information can indicate a transmission time, for example, 2s, and a volume of data requested to be transmitted within the transmission time. Specifically, the information transmission objective can be achieved regardless of whether the first latency and the data volume are indicated or the first latency and the data transmission rate are indicated. In addition, an indication of the data volume or the transmission rate may be a specific value, or may be a range. For example, when the data volume is indicated, 100 Mbits or 30 Mbits to 300 Mbits may be indicated. When the transmission rate is indicated, 50 Mbits/second may be indicated, or 15 Mbits/second to 150 Mbits/second may be indicated. This is not limited in this application.

For example, the request message in this embodiment of this application may be sent by using a MAC CE message, physical layer signaling, a radio link control (radio link control, RLC) packet, a packet data convergence protocol (packet data convergence protocol, PDCP) control packet, or an RRC command. This is not limited in this application.

Optionally, the request message in this embodiment of this application may further include estimated time of arrival information of the target service. In a possible implementation, the estimated time of arrival information of the target service indicates that an estimated time of arrival of the target service is a time difference between a time at which the data actually arrives at an access stratum of the terminal device and a time at which the terminal device sends the request message.

It should be understood that, after sending the request message, the terminal device further needs processing time to generate a data packet that can be sent. For example, if the estimated time of arrival information of the target service indicates that the time at which the data actually arrives at the access stratum of the terminal device is the 7^{th} second, and a time at which the terminal device sends a resource request is the 6^{th} second, the access network device may start to receive the data of the target service from the 7^{th} second. In this way, resource overheads of 1 second can be reduced.

In other words, the request message carries the estimated time of arrival information of the target service, so that a resource allocated by the access network device for the target service is more accurate, thereby reducing resource overheads.

Optionally, the request message in this embodiment of this application may further carry a DRB ID, a logical channel ID, or a QoS flow ID corresponding to a DRB established by the access network device for the terminal device. This is not specifically limited in this embodiment of this application.

Optionally, if the terminal device triggers a service request, for example, an app of the terminal device triggers a photo sending request, the terminal device may send a resource request indication to the access network device, and the access network device may feed back, to the terminal device based on a resource status, a volume of data that can be transmitted. This process may be performed once in each processing process of the service, for example, in a processing process of each photo.

S520: The access network device sends a resource response message to the terminal device. Correspondingly, the terminal device receives the resource response message from the access network device.

In an embodiment, the resource response message indicates second data volume information, and the second data volume information indicates a processing capability supported by the access network device for transmission of the target service within the first latency.

Refer to the foregoing descriptions of the first data volume information. Optionally, the second data volume information indicates a data volume supported by the access network device for transmission of the target service within the first latency. The data volume may be a data volume range, or may be a specific data volume value. For example, the data volume indicated by the second data volume information may be 30 Mbits to 100 Mbits, or the data volume indicated by the second data volume information may be 100 Mbits. Optionally, the second data volume information indicates a data transmission rate supported by the access network device for transmission of the target service within the first latency, for example, 40 Mbps.

In this embodiment of this application, the second data volume information is determined by the access network device based on the first data volume information. For example, the data volume indicated by the first data volume information is 300 Mbits, and the data volume indicated by the second data volume information may be 100 Mbits.

In a possible implementation, the resource response message includes the second data volume information. For example, the data volume indicated by the second data volume information included in the resource response message is 100 Mbits.

In another possible implementation, the resource response message does not carry data volume information, and the resource response message includes indication information, indicating that the processing capability supported by the access network device for transmission of the target service is a processing capability indicated by the first data volume information.

For example, the data volume indicated by the first data volume information is 30 Mbits to 300 Mbits, and the resource response message includes indication information, indicating that a data volume supported by the access network device for transmission of the target service is 30 Mbits to 300 Mbits, or indicating that a maximum data volume supported by the access network device for transmission of the target service is 300 Mbits.

Certainly, the foregoing merely provides an example of implementation of default signaling or an indication. The signaling or the indication in the resource response message may alternatively be other content. This is not specifically limited in this embodiment of this application.

For example, the resource response message in this embodiment of this application may be sent by using a MAC CE message, physical signaling, an RLC control packet, a PDCP control packet, or an RRC command. This is not limited in this application.

Optionally, the resource response message in this embodiment of this application may further include a parameter such as a DRB identifier ID, a logical channel (logical channel, LCH) ID, or a QoS flow ID corresponding to the request message. For descriptions of related parameters, refer to the conventional technology. Details are not described herein again.

Optionally, the resource response message in this embodiment of this application may further include a second initial transmission rate, and the second initial transmission rate is used to determine a send window of an application transmission protocol of the data of the target service, so that the terminal device can send the data of the target service to the access network device based on the second initial transmission rate, thereby reducing overheads of a plurality of transmission rate attempts by the terminal device.

For example, the second initial transmission rate in this embodiment of this application may be an initial transmission rate for a MAC CE adaptive rate.

For example, the application transmission protocol in this embodiment of this application may be a transmission control protocol (transmission control protocol, TCP) or a user datagram protocol (user datagram protocol, UDP)-based low-latency internet transport layer protocol (quick UDP internet connection, QUIC).

In another embodiment, the resource response message indicates that the access network device cannot provide the processing capability for the target service. For example, the resource response message may include a failure indication, indicating that the access network device cannot provide the processing capability for the target service.

For example, the resource response message is a failure response message, indicating that the access network device cannot provide the processing capability for the target service.

It should be noted that when the resource response message indicates that the access network device cannot provide the processing capability for the target service, the following step S530 is not performed. After receiving the resource response message, the terminal device determines not to send the data of the target service to the access network device. In a possible implementation, a local application layer of the terminal device processes the data of the target service, that is, an objective of sending the data of the target service by the terminal device to the access network device is that the access network device processes the data of the target service. However, in this case, the terminal device does not send the data of the target service to the access network device, and the local application layer of the terminal device processes the target service.

Optionally, the resource response message in this embodiment of this application may be a reused existing message, and a field indicating the second data volume information is newly added to the existing message, or a field indicating that the access network device cannot provide the processing capability for the target service is newly added to the existing message. Alternatively, the resource response message in this embodiment of this application may be a new message, and the new message separately indicates the second data volume information, or the new message separately indicates that the access network device cannot provide the processing capability for the target service. For example, the resource response message is a failure response message, indicating that the access network device cannot provide the processing capability for the target service. This is not specifically limited in this embodiment of this application.

Optionally, in this embodiment of this application, a message indicating the second data volume information and a message indicating that the access network device cannot provide the processing capability for the target service may use a same signaling format. For example, different values are set for a field in a same MAC CE to indicate different response results. For example, a data burst max size is set to 0 or is set to the second data volume information. Alternatively, in this embodiment of this application, a message indicating the second data volume information and a message indicating that the access network device cannot provide the processing capability for the target service may use different signaling formats. For example, the message indicating the second data volume information uses a MAC CE 1 to indicate the second data volume information, and a MAC CE 2 is used for the message indicating that the access network device cannot provide the processing capability for the target service. This is not specifically limited in this embodiment of this application.

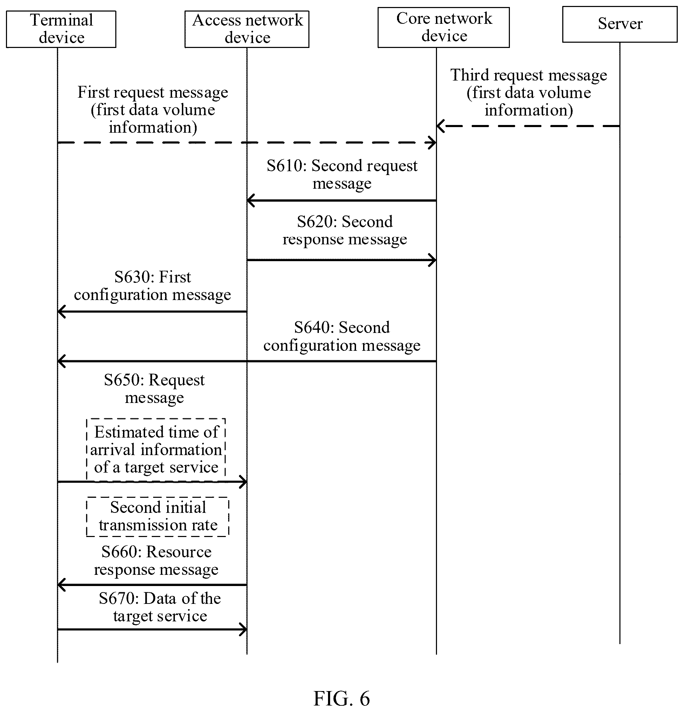

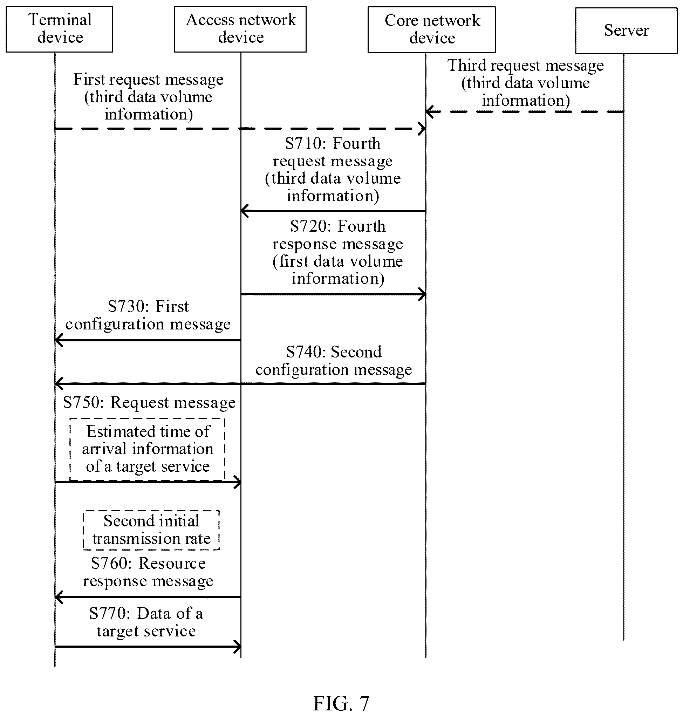

As described in this embodiment of this application, in a transmission method corresponding to FIG. 6 or FIG. 7, a case in which the resource response message indicates that the access network device cannot provide the processing capability for the target service is not described again. However, it should be understood that this case is included in the transmission method corresponding to FIG. 6 or FIG. 7 in embodiments of this application. This is uniformly described herein.

S530: The terminal device sends the data of the target service to the access network device based on the second data volume information.

Correspondingly, the access network device receives the data of the target service from the terminal device.

Optionally, in this embodiment of this application, after receiving the resource response message, the terminal device may further determine a parameter of the target service based on the second data volume information indicated by the resource response message.

For example, in this embodiment of this application, the parameter of the target service may be a resolution, a compression rate, or the like. For example, if a range of the data volume indicated by the second data volume information is relatively small, the terminal device reduces a resolution of a to-be-sent picture, or reduces a quantity of pictures, or increases a compression rate for subsequent data sending, so as to meet a first latency requirement for data sending.

Further, that the terminal device sends the data of the target service to the access network device based on the second data volume information in S503 may include S503a or S503b.

S503a: When the data volume indicated by the second data volume information is greater than or equal to a first threshold, the terminal device may send the data of the target service to the access network device based on the parameter of the target service.

S503b: When the data volume indicated by the second data volume information is less than a first threshold, the terminal device does not send the data of the target service to the access network device. That is, when the second data volume information is less than a data volume required by the terminal device, the terminal device chooses not to send the target service to the access network device.

Optionally, in this embodiment of this application, the first threshold may be a data volume corresponding to the target service.

For example, if the data volume indicated by the second data volume information is 100 Mbits, and the first threshold is 70 Mbits, the terminal device may send, to the access network device based on a resolution 1024×768 of the target service, data of 70 Mbits of the target service whose resolution is 1024×768.

Alternatively, for example, if the data volume indicated by the second data volume information is 60 Mbits, and the first threshold is 70 Mbits, the terminal device may not send data of 70 Mbits of the target service to the access network device based on 60 Mbits indicated by the resource response message.

According to the transmission method provided in this embodiment of this application, when the target service arrives, the terminal device may directly include the first data volume information and the indication information of the first latency in the request message, to request the processing capability for transmission of the target service. Further, the access network device determines the second data volume information indicating the processing capability supported by the access network device for transmission of the target service within the first latency, and feeds back the second data volume information to the terminal device, so that the terminal device sends the data of the target service to the access network device based on the second data volume information. The second data volume information is determined based on the first data volume information that indicates a processing capability for the target service requested to be transmitted within the first latency. Because this solution is initiated when the target service arrives, overheads of reserving a resource in advance before the service arrives are reduced. In addition, because the terminal device sends the data of the target service based on the second data volume information fed back by the access network device, and the second data volume information is determined based on the first data volume information that is fed back by the terminal device and that indicates the processing capability for the target service requested to be transmitted within the first latency, this solution can ensure a transmission rate of the target service.

FIG. 6 to FIG. 9 are other diagrams of transmission methods according to an embodiment of this application. The following separately provides descriptions.

In a possible implementation, FIG. 6 is a diagram of an example of a transmission method according to an embodiment of this application. The method is described by using interaction between a terminal device, an access network device, and a core network device as an example. Certainly, an action of the terminal device in the method may alternatively be performed by an apparatus/module in the terminal device, for example, a chip, a processor, or a processing unit in the terminal device. An action of the access network device in the method may alternatively be performed by an apparatus/module in the access network device, for example, a chip, a processor, or a processing unit in the access network device. An action of the core network device in the method may alternatively be performed by an apparatus/module in the core network device, for example, a chip, a processor, or a processing unit in the core network device. This is not specifically limited in this embodiment of this application. For example, as shown in FIG. 6, the transmission method 600 includes the following steps.

S610: The core network device sends a second request message to the access network device. Correspondingly, the access network device receives the second request message from the core network device.

In this embodiment of this application, steps performed by the core network device may be, for example, performed by an AMF. This is not limited in this embodiment of this application.

In this embodiment of this application, the second request message is used to request to establish a QoS flow that carries a target service. The second request message includes first data volume information and indication information of a first latency. For related descriptions of the first data volume information and the indication information of the first latency, refer to the descriptions of step S510. A difference lies only in that the first data volume information in this embodiment of this application indicates a processing capability for the target service that the core network device indicates to transmit within the first latency. Details are not described herein again. In this embodiment of this application, the QoS flow indicates a channel resource for transmission of data packets with a same QoS requirement or similar QoS requirements. The QoS flow in this embodiment of this application may also have another name, for example, a service flow, a bearer, or a service pipeline. This is not limited in embodiments of this application.

For example, the second request message may be included in a protocol data unit (protocol data unit, PDU) session establishment message, or the second request message may be included in a PDU session modification message, or the second request message may be included in a terminal device context (context) establishment message, or the second request message may be included in a terminal device context modification message. This is not limited in this application.

For example, in this embodiment of this application, the QoS flow that carries the target service may be a GBR-type QoS flow, or may be a non-GBR-type QoS flow, or may be a new type of QoS flow, for example, a burst-type QoS flow, or an on-demand guarantee-type QoS flow. This is not limited in this embodiment of this application.

In a possible implementation, the core network device may determine the second request message by using a protocol (internet protocol, IP) address, a port number, or an application (application, APP) ID for a connection between network devices in uplink and downlink data.

In another possible implementation, the core network device receives a first request message from the terminal device, where the first request message includes the first data volume information and the indication information of the first latency; and the core network device determines the second request message based on the first request message. For example, the first request message may be included in a PDU session establishment message, or the first request message may be included in a PDU session modification message. This is not limited in this application.

In another possible implementation, the core network device receives a third request message from a server, where the third request message includes the first data volume information and the indication information of the first latency; and the core network device determines the second request message based on the third request message. For example, the third request message may be included in a resource application message or a PDU session establishment message, or the third request message may be included in a PDU session modification message. This is not limited in this application.

In this embodiment of this application, the first request message or the third request message is triggered by the target service. In other words, when the target service arrives, the terminal device may be triggered to send the first request message to the core network device, or the server may be triggered to send the third request message to the core network device. This is not specifically limited in this embodiment of this application.

S620: The access network device sends a second response message to the core network device. Correspondingly, the core network device receives the second response message from the access network device.

In this embodiment of this application, the second response message indicates that the QoS flow that carries the target service is successfully established.

Optionally, in this embodiment of this application, the second response message may be included in a PDU session establishment message response, or the second response message may be included in a PDU session modification response message, or the second response message may be included in a UE context establishment response message, or the second response message may be included in a UE context modification response message. This is not limited in this application.

S630: The access network device sends a first configuration message to the terminal device. Correspondingly, the terminal device receives the first configuration message from the access network device.

In this embodiment of this application, the first configuration message indicates to establish a data bearer of the QoS flow carrying the target service. The first configuration message may include a first initial transmission rate, and the first initial transmission rate indicates an initial rate at which data of the target service is sent to the access network device. It should be understood that when a resource response message includes a second initial transmission rate, and the first configuration message includes the first initial transmission rate, the first initial transmission rate and the second initial transmission rate are a same initial transmission rate.

In a possible implementation, the first configuration message includes the first data volume information and/or the indication information of the first latency, so that the terminal device may determine, based on the first data volume information and/or the indication information of the first latency, an initial data volume of the target service that can be transmitted.

Optionally, in this embodiment of this application, the first data volume information and/or the indication information of the first latency in the first configuration message may be included in a 5QI parameter of the QoS flow and sent to the terminal device; or the first data volume information and/or the indication information of the first latency in the first configuration message are included in another parameter independent of the 5QI and sent to the terminal device. This is not specifically limited in this embodiment of this application.

In another possible implementation, the first configuration message does not include the first data volume information, and the terminal device considers, by default, that the data bearer of the QoS flow carrying the target service is a data bearer of the QoS flow corresponding to the first data volume information.

Optionally, in this embodiment of this application, the first configuration message may be included in an RRC reconfiguration message. This is not limited in this application.

Optionally, in this embodiment of this application, content of the first configuration message may be the same as content of the second response message. Alternatively, content of the first configuration message may be different from content of the second response message. In this case, the first configuration message may be determined by using the second response message.

S640: The core network device sends a second configuration message to the terminal device. Correspondingly, the terminal device receives the second configuration message from the core network device.

In this embodiment of this application, the second configuration message indicates to establish the QoS flow carrying the target service.

In a possible implementation, the second configuration message includes the first data volume information and the indication information of the first latency, so that the terminal device determines that the QoS flow carrying the target service is a QoS flow corresponding to the first data volume information.

Optionally, in this embodiment of this application, the first data volume information and the indication information of the first latency in the second configuration message may be included in a 5QI parameter of the QoS flow and sent to the terminal device. For example, as shown in Table 1, in this embodiment of this application, the first data volume information of the newly established QoS flow and the indication information of the first latency are included in a 5QI parameter.

**Table 1**

| |
|---|
| QoS flow type (GBR or non-GBR) |
| 5G quality of service identifier (5QI) |
| Address resolution protocol (ARP) |
| Data volume range Burst size range |
| Latency Latency |

Alternatively, the first data volume information and the indication information of the first latency in the second configuration message are included in another parameter independent of the 5QI and sent to the terminal device. For example, as shown in Table 2, in this embodiment of this application, the first data volume information of the newly established QoS flow and the indication information of the first latency are included in another parameter, and the parameter is independent of the 5QI.

**Table 2**

| Information quality QCI | Resource type Resource Type | Priority Priority Level | Packet delay budget Packet Delay Budget | Packet error loss rate Packet Error Loss Rate | Example service Example Services | |
|---|---|---|---|---|---|---|
| 1 | Guaranteed bit rate GBR | 2 | 100 ms | 10-2 | Conversational voice Conversational Voice | |
| 2 | | 4 | 150 ms | 10-3 | Conversational voice (live streaming) Conversational Video (Live Streaming) | |
| 3 | | 3 | 50 ms | 10-3 | Real-time gaming Real-Time Gaming | |
| 5 | Non-guaranteed bit rate Non-GBR | 1 | 100 ms | 10-6 | Signal transmission IMS Signaling | |
| 6 | | 6 | 300 ms | 10-6 | Video recording Video (Buffered Streaming) | |
| 7 | | 7 | 100 ms | 10-3 | Voice Voice, video recording Video (Live Streaming), interactive gaming Interactive Gaming | |
| 8 | | 8 | 300 ms | 10-6 | Video recording Video (buffered streaming Buffered Streaming) | |
| XX | Guaranteed bit rate or non-guaranteed bit rate GBR or non-GBR | 2 | 2000 ms | 10-6 | Cloud-based photo enhancement Cloud-based photo enhancement | **Data** volume burst size: 30M to 300M |

Optionally, in this embodiment of this application, the second configuration message may be included in a PDU session establishment message, or the second configuration message may be included in a PDU session modification message, or the second configuration message may be included in a UE context establishment message, or the second configuration message may be included in a UE context modification message. This is not limited in this application.

Optionally, in this embodiment of this application, the first data volume information and the indication information of the first latency that are included in the second configuration message may be the same as content of the second response message. Alternatively, the first data volume information and the indication information of the first latency that are included in the second configuration message may be different from content of the second response message. In this case, the second configuration message may be determined by using the second response message.

According to the foregoing steps S610 to S640, the QoS flow that carries the target service is established. Further, the terminal device may send a request message to the access network device based on related information of the QoS flow of the target service. For example, as shown in FIG. 6, the transmission method provided in this embodiment of this application may further include the following steps.

S650: The terminal device sends a request message to the access network device. Correspondingly, the access network device receives the request message from the terminal device. The request message is used to request a processing capability for transmission of the target service.

Related descriptions of step S650 are similar to those of step S510 in the embodiment in FIG. 5. A difference lies only in that in step S650, because the access network device has obtained the first data volume information and the indication information of the first latency through a core network, the request message may not include the first data volume information and the indication information of the first latency. For other related descriptions, refer to the descriptions of step S510 in the embodiment in FIG. 5. Details are not described herein again.

S660: The access network device sends a resource response message to the terminal device. Correspondingly, the terminal device receives the resource response message from the access network device.

For related descriptions of step S660, refer to related descriptions of step S520 in the embodiment in FIG. 5. Details are not described herein again.

S670: The terminal device sends the data of the target service to the access network device based on the second data volume information.

Correspondingly, the access network device receives the data of the target service from the terminal device.

For related descriptions of step S670, refer to related descriptions of step S530 in the embodiment in FIG. 5. Details are not described herein again.

According to the transmission method provided in this embodiment of this application, when the target service arrives, new establishment of the QoS flow is triggered. In a QoS flow establishment request, the core network device sends, to the access network device, parameters used to establish the QoS flow: the first data volume information and the indication information of the first latency, so that the access network device establishes, based on the first data volume information and the indication information of the first latency, the QoS flow dedicated to the target service. Further, after the QoS flow is established, the terminal device may request the processing capability for transmission of the target service. Further, the access network device may determine, based on the parameters (namely, the first data volume information and the indication information of the first latency) of the QoS flow of the target service, the second data volume information indicating the data volume supported by the access network device for transmission of the target service within the first latency, and then feed back the second data volume information to the terminal device, so that the terminal device sends the data of the target service to the access network device based on the second data volume information. Because this solution is initiated when the target service arrives, overheads of reserving a resource in advance before the service arrives are reduced. In addition, because the terminal device sends the data of the target service based on the second data volume information fed back by the access network device, and the second data volume information is determined based on the first data volume information (that is, a parameter of the QoS flow) indicating the processing capability for the target service that the core network device requests to transmit within the first latency in a process in which the core network device requests to establish the QoS flow, this solution can ensure a transmission rate of the target service.

In another possible implementation, FIG. 7 is a diagram of an example of a transmission method according to an embodiment of this application. The method is described by using interaction between a terminal device, an access network device, and a core network device as an example. Certainly, an action of the terminal device in the method may alternatively be performed by an apparatus/module in the terminal device, for example, a chip, a processor, or a processing unit in the terminal device. An action of the access network device in the method may alternatively be performed by an apparatus/module in the access network device, for example, a chip, a processor, or a processing unit in the access network device. An action of the core network device in the method may alternatively be performed by an apparatus/module in the core network device, for example, a chip, a processor, or a processing unit in the core network device. This is not specifically limited in this embodiment of this application. For example, as shown in FIG. 7, the transmission method includes the following steps.

S710: The core network device sends a fourth request message to the access network device. Correspondingly, the access network device receives the fourth request message from the core network device.

In this embodiment of this application, the fourth request message is used to request to establish a QoS flow that carries a target service. The fourth request message includes third data volume information and a first latency. The third data volume information in this embodiment of this application is used by the access network device to determine first data volume information. This embodiment of this application is described in detail in step S720.

For example, the fourth request message may be included in a PDU session establishment message, or the fourth request message may be included in a PDU session modification message, or the fourth request message may be included in a terminal device context (context) establishment message, or the fourth request message may be included in a terminal device context modification message. This is not limited in this application.

For example, in this embodiment of this application, the QoS flow that carries the target service may be a GBR-type QoS flow, or may be a non-GBR-type QoS flow, or may be a new type of QoS flow. This is not limited in this embodiment of this application. The QoS flow indicates a channel resource for transmission of data packets with a same QoS requirement or similar QoS requirements, and may also have another name such as a service flow, a bearer, or a service pipeline. This is not limited in this embodiment of this application.

In a possible implementation, the core network device may determine the fourth request message by using, for example, an IP address, a port number, or an APP ID in uplink and downlink data.

In another possible implementation, the core network device receives a first request message from the terminal device, where the first request message includes the third data volume information and the indication information of the first latency; and the core network device determines the fourth request message based on the first request message. For example, the first request message may be included in a PDU session establishment message, or the first request message may be included in a PDU session modification message. This is not limited in this application.

In another possible implementation, the core network device receives a third request message from a server, where the third request message includes the third data volume information and the indication information of the first latency; and the core network device determines the fourth request message based on the third request message. For example, the third request message may be included in a PDU session establishment message, or the third request message may be included in a PDU session modification message. This is not limited in this application.

In this embodiment of this application, the first request message or the third request message is triggered by the target service. In other words, when the target service arrives, the terminal device may be triggered to send the first request message to the core network device, or the server may be triggered to send the third request message to the core network device. This is not specifically limited in this embodiment of this application.

S720: The access network device sends a fourth response message to the core network device. Correspondingly, the core network receives the second response message from the access network.

In this embodiment of this application, the fourth response message indicates that the QoS flow that carries the target service is successfully established.

In this embodiment of this application, the fourth response message includes the first data volume information, and the first data volume information is determined by the access network device based on the third data volume information in the fourth request message and an actual status of the access network device. A processing capability indicated by the first data volume information may be lower than or equal to a processing capability indicated by the third data volume information. For example, a data volume indicated by the third data volume information may be 300 Mbits, and the access network device determines, based on a capacity of the access network device, that the data volume indicated by the third data volume information cannot be accepted. In this case, the access network device determines, based on the capacity of the access network device, that the data volume indicated by the first data volume information may be 200 Mbits. Alternatively, a data volume indicated by the third data volume information may be 300 Mbits, and the access network device determines, based on a capability of the access network device, that the data volume indicated by the third data volume information can be accepted. In this case, the access network device determines, based on the capability of the access network device, that the data volume indicated by the first data volume information may be 300 Mbits.

It should be understood that in this embodiment of this application, the first data volume information is determined by the access network device based on the third data volume information sent by the core network device. Therefore, the first data volume information indicates a processing capability for the target service allowed by the access network device to be transmitted within the first latency.

Optionally, in this embodiment of this application, the fourth response message may be included in a PDU session establishment message, or the fourth response message may be included in a PDU session modification message, or the fourth response message may be included in a UE context establishment message, or the fourth response message may be included in a UE context modification message. This is not limited in this application.

S730: The access network device sends a first configuration message to the terminal device. Correspondingly, the terminal device receives the first configuration message from the access network device.

For related descriptions of step S730, refer to related descriptions of step S630 in the embodiment in FIG. 6. Details are not described herein again.

S740: The core network device sends a second configuration message to the terminal device. Correspondingly, the terminal device receives the second configuration message from the core network device.

For related descriptions of step S740, refer to related descriptions of step S640 in the embodiment in FIG. 6. Details are not described herein again.

It should be noted that in step S730 and step S740, at least one of the first configuration information and the second configuration information includes the first data volume information, so that the terminal device determines that the QoS flow carrying the target service is a QoS flow corresponding to the first data volume information, or the terminal device determines that a data bearer of the QoS flow carrying the target service is a data bearer of the QoS flow corresponding to the first data volume information.

According to the foregoing steps S710 to S740, the QoS flow that carries the target service is established. Further, the terminal device may send a request message to the access network device based on related information of the QoS flow of the target service. For example, as shown in FIG. 7, the transmission method provided in this embodiment of this application may further include the following steps.

S750: The terminal device sends a request message to the access network device. Correspondingly, the access network device receives the request message from the terminal device. The request message is used to request a processing capability for transmission of the target service.

For related descriptions of step S750, refer to related descriptions of step S650 in the embodiment in FIG. 6. Details are not described herein again.

S760: The access network device sends a resource response message to the terminal device. Correspondingly, the terminal device receives the resource response message from the access network device.

For related descriptions of step S760, refer to related descriptions of step S520 in the embodiment in FIG. 5. Details are not described herein again.

S770: The terminal device sends the data of the target service to the access network device based on the second data volume information.

For related descriptions of step S770, refer to related descriptions of step S530 in the embodiment in FIG. 5. Details are not described herein again.

For example, in this embodiment of this application, the third data volume information requested by the terminal device or the server may be, for example, 300 Mbits, and the first data volume information determined by the access network device may be, for example, 200 Mbits. During actual scheduling, the second data volume information indicated by the access network device to the terminal device may be, for example, 100 Mbits, so that the terminal device may send the data of the target service to the access network device based on the second data volume information.

According to the transmission method provided in this embodiment of this application, when the target service arrives, new establishment of the QoS flow is triggered. In a QoS flow establishment request, the core network device sends, to the access network device, parameters used to establish the QoS flow: the third data volume information and the first latency, so that the access network device determines, based on the third data volume information and the indication information of the first latency, the first data volume information that can be accepted by the access network device and the indication information of the first latency, and establishes the QoS flow dedicated to the target service. Further, after the QoS flow is established, the terminal device may request the processing capability for transmission of the target service. Further, the access network device may determine, based on the parameters (namely, the first data volume information and the indication information of the first latency) of the QoS flow of the target service, the second data volume information indicating the processing capability supported by the access network device for transmission of the target service within the first latency, and then feed back the second data volume information to the terminal device, so that the terminal device sends the data of the target service to the access network device based on the second data volume information. Because this solution is initiated when the target service arrives, overheads of reserving a resource in advance before the service arrives are reduced. In addition, because the terminal device sends the data of the target service based on the second data volume information fed back by the access network device, and the second data volume information is determined based on the first data volume information (that is, a parameter of the QoS flow) indicating the processing capability for the target service that the core network device requests to transmit within the first latency in a process in which the core network device requests to establish the QoS flow, this solution can ensure a transmission rate of the target service.

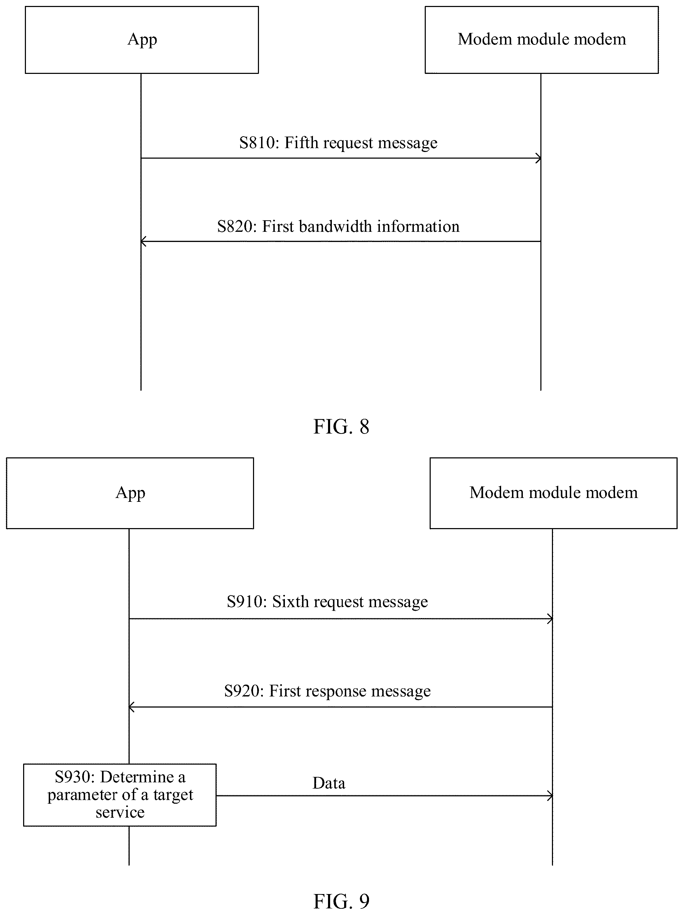

FIG. 8 is a diagram of internal interaction of a terminal device in a process of establishing a QoS flow of a target service according to the foregoing embodiment. As shown in FIG. 8, the terminal device includes an app of the terminal device and a modem module modem of the terminal device. Steps performed by the terminal device in the foregoing embodiment may be performed by a module or a chip of the terminal device, for example, may be performed by the modem of the terminal device. As shown in FIG. 8, the transmission method provided in this embodiment of this application further includes the following steps.

S810: The app sends a fifth request message to the modem. Correspondingly, the modem receives the fifth request message from the app.

In this embodiment of this application, the fifth request message is used to request to establish a QoS flow that carries a target service.

S820: The modem sends first bandwidth information to the app. Correspondingly, the app receives the bandwidth information from the modem.

In this embodiment of this application, after receiving a first configuration message from an access network device and a second configuration message from a core network device, the modem may send the first bandwidth information to the app. The first bandwidth information may include uplink and downlink initial bandwidth information and first data volume information corresponding to the QoS flow of the target service.

Optionally, in this embodiment of this application, after receiving the first bandwidth information, the app may further send data of the target service to a server based on the first bandwidth information.

In the method shown in FIG. 8, the app sends, to the modem, the fifth request information for requesting to establish the QoS flow used to carry the target service. After receiving the fifth request information, the modem interacts with the core network device and the access network device, to establish the QoS flow used to carry the target service. Further, the modem determines that the QoS flow carrying the target service is successfully established, and sends, to the app, the first bandwidth information related to the QoS flow that carries the target service, so that the app obtains the first bandwidth information, and sends the data of the target service to the server based on the first bandwidth information.

FIG. 9 is a diagram of internal interaction corresponding to a terminal device after the terminal device initiates a resource request according to the foregoing embodiment. The terminal device includes an app of the terminal device and a modem of the terminal device. Steps performed by the terminal device in the foregoing embodiment may be performed by a module or a chip of the terminal device, for example, may be performed by the modem of the terminal device. As shown in FIG. 9, the transmission method provided in this embodiment of this application further includes the modem.

S910: The app sends a sixth request message to the modem, and correspondingly, the modem receives the sixth request message from the app.

In this embodiment of this application, the sixth request message is used to request a processing capability for a target service, and the modem sends a request message to an access network device based on the sixth request message.

In a possible implementation, the target service does not trigger new establishment of a QoS flow, and after receiving the sixth request message, the modem triggers the procedure corresponding to the terminal device side shown in FIG. 5.

In another possible implementation, the target service triggers new establishment of a QoS flow, and before the app sends the sixth request message to the modem, the method further includes steps in the method shown in FIG. 8.

S920: The modem sends a first response message to the app, and correspondingly, the app receives the first response message from the modem.

In this embodiment of this application, the first response message is determined based on a resource response message.

S930: The app determines a parameter of the target service by using the first response message, and sends data of the target service to the modem based on the parameter of the target service.

In this embodiment of this application, the parameter of the target service may be a compression rate of a photo, a resolution of a photo, or the like.

Optionally, in this embodiment of this application, the app may determine a format of the target service such as a photo and an initial flow control window based on bandwidth information (for example, the first bandwidth information in step 820) obtained in a QoS flow establishment process or based on bandwidth information obtained from the request message. This is not specifically limited in this embodiment of this application.

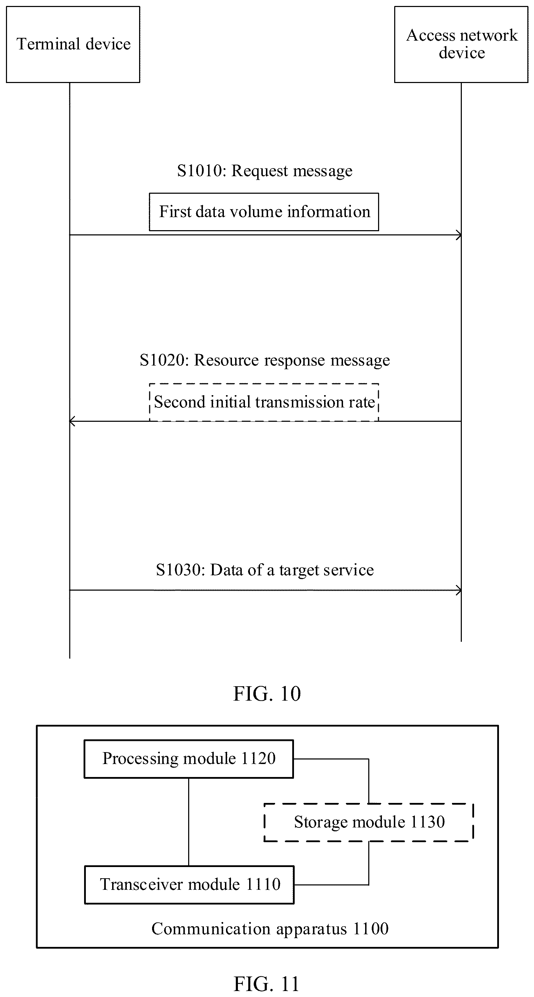

The transmission method provided in embodiments of this application is described in detail in the embodiments shown in FIG. 5 to FIG. 9 in a manner of specific implementations. In conclusion, FIG. 10 is a general schematic flowchart of a transmission method according to an embodiment of this application. The transmission method includes the following steps.

S1010: A terminal device sends a request message to an access network device. Correspondingly, the access network device receives the request message from the terminal device.

In this embodiment of this application, the request message is used to request a processing capability for transmission of a target service.

Optionally, in this embodiment of this application, the processing capability for the target service is a processing capability for the target service allowed by the access network device to be transmitted within a first latency.

In a possible implementation, the request message includes first data volume information and indication information of the first latency, and the first data volume information indicates a processing capability for the target service that the terminal device requests to transmit within the first latency. For related descriptions of the first data volume information and the indication information of the first latency that are included in the request message in this embodiment of this application, refer to the related descriptions in the embodiment in FIG. 5. Details are not described herein again.

In another possible implementation, the target service triggers new establishment of a QoS flow, the request message does not need to include first data volume information and indication information of the first latency, and the first data volume information indicates a processing capability for the target service that a core network device requests to transmit within the first latency, or the first data volume information indicates a processing capability for the target service that the access network device allows to transmit within the first latency. For related descriptions that the target service triggers new establishment of the QoS flow in this embodiment of this application, refer to related descriptions in the embodiment in FIG. 6 or FIG. 7. Details are not described herein again.

S 1020: The access network device sends a resource response message to the terminal device. Correspondingly, the terminal device receives the resource response message from the access network device.

In this embodiment of this application, the resource response message indicates second data volume information. In this embodiment of this application, for the resource response message, refer to related descriptions in the embodiments in FIG. 5 to FIG. 7. Details are not described herein again.

S1030: The terminal device sends data of the target service to the access network device based on the second data volume information. Correspondingly, the access network device receives the data of the target service from the terminal device.

In this embodiment of this application, for step S1030, refer to related descriptions in the embodiments in FIG. 5 to FIG. 7. Details are not described herein again.

According to the transmission method provided in this embodiment of this application, when the target service arrives, the terminal device requests the processing capability for transmission of the target service. Further, the access network device feeds back the second data volume information to the terminal device, so that the terminal device sends the data of the target service to the access network device based on the second data volume information. Because this solution is initiated when the target service arrives, overheads of reserving a resource in advance before the service arrives are reduced. In addition, because the terminal device sends the data of the target service based on the second data volume information fed back by the access network device, and the second data volume information is determined based on the first data volume information that is fed back by the terminal device and that indicates the processing capability for the target service requested to be transmitted within the first latency, this solution can ensure a transmission rate of the target service.

The foregoing mainly describes the solutions provided in embodiments of this application from a perspective of interaction between the terminal device and the access network device. Correspondingly, an embodiment of this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the access network device in the foregoing method embodiments, an apparatus including the foregoing access network device, or a component that can be used in the access network device. It may be understood that, to implement the foregoing functions, the communication apparatus includes corresponding hardware structures and/or software modules for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be understood that division into the modules in embodiments of this application is an example, and is merely logical function division. In actual implementation, there may be another division manner.

For example, FIG. 11 is a diagram of a communication apparatus according to an embodiment of this application. For example, the communication apparatus is the terminal device (which may be a chip of the terminal device, a module of the terminal device, or an internal apparatus of the terminal device) in the foregoing method embodiments. The communication apparatus 1100 includes a transceiver module 1110 and a processing module 1120. The transceiver module 1110 may also be referred to as a transceiver unit, is configured to implement receiving and sending functions, and for example, may be a transceiver circuit, a transceiver, a transceiver machine, or a communication interface.

In a solution, the transceiver module 1110 is configured to send a request message to an access network device.

The request message is used to request a processing capability for transmission of a target service.

The transceiver module 1110 is further configured to receive a resource response message from the access network device.

The resource response message indicates second data volume information, the second data volume information indicates a processing capability supported by the access network device for transmission of the target service within a first latency, and the processing capability includes a data volume or a data transmission rate.

The processing module 1120 is configured to send data of the target service to the access network device based on the second data volume information.

All related content of each step in the foregoing method embodiment may be cited to a function description of a corresponding functional module, and details are not described herein again. Optionally, the communication apparatus 1100 may further include a storage module 1130. The storage module 1130 may be configured to store instructions and/or data, and the processing module 1120 may read the instructions and/or the data in the storage module 1130.

In this embodiment of this application, the communication apparatus 1100 is presented in a form of obtaining each functional module through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the network device 1300 may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the signal transmission method in the foregoing method embodiments.

Specifically, a function/an implementation process of the transceiver module 1110 and the processing module 1120 in FIG. 11 may be implemented by invoking, by the processor 401 in the communication apparatus 400 shown in FIG. 4, the computer-executable instructions stored in the memory 403. Alternatively, a function/an implementation process of the processing module 1120 in FIG. 11 may be implemented by invoking, by the processor 401 in the communication apparatus 400 shown in FIG. 4, the computer-executable instructions stored in the memory 403, and a function/an implementation process of the transceiver module 1110 in FIG. 11 may be implemented by using the communication interface 404 in the communication apparatus 400 shown in FIG. 4.

The communication apparatus 1100 (which may be a chip of the terminal device, a module of the terminal device, or an internal apparatus of the terminal device) provided in this embodiment of this application may perform the foregoing signal transmission method. Therefore, for technical effects that can be achieved by the communication apparatus, refer to the foregoing method embodiments. Details are not described herein again.

Alternatively, for example, the communication apparatus is the access network device (which may be a chip of the access network device, a module of the access network device, or an internal apparatus of the access network device) in the foregoing method embodiments. The access network device 1100 includes a transceiver module 1110 and a processing module 1120. The transceiver module 1110 may also be referred to as a transceiver unit, is configured to implement receiving and sending functions, and for example, may be a transceiver circuit, a transceiver, a transceiver machine, or a communication interface.

In a solution, the transceiver module 1110 is configured to receive a request message from a terminal device, where the request message is used to request a processing capability for transmission of a target service.

The transceiver module 1110 is further configured to send a resource response message to the terminal device, where the resource response message indicates second data volume information, the second data volume information indicates a processing capability supported by an access network device for transmission of the target service within a first latency, and the processing capability is a data volume or a data transmission rate.

All related content of each step in the foregoing method embodiment may be cited to a function description of a corresponding functional module, and details are not described herein again. Optionally, the communication apparatus 1100 may further include a storage module 1130. The storage module 1130 may be configured to store instructions and/or data, and the processing module 1120 may read the instructions and/or the data in the storage module 1130.

In this embodiment of this application, the communication apparatus 1100 is presented in a form of obtaining each functional module through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 1100 may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the signal transmission method in the foregoing method embodiments.

Specifically, a function/an implementation process of the transceiver module 1110 and the processing module 1120 in FIG. 11 may be implemented by invoking, by the processor 401 in the communication apparatus 400 shown in FIG. 4, the computer-executable instructions stored in the memory 403. Alternatively, a function/an implementation process of the processing module 1120 in FIG. 11 may be implemented by invoking, by the processor 401 in the communication apparatus 400 shown in FIG. 4, the computer-executable instructions stored in the memory 403, and a function/an implementation process of the transceiver module 1110 in FIG. 11 may be implemented by using the communication interface 404 in the communication apparatus 400 shown in FIG. 4.

The access network device 1100 (which may be a chip of the access network device, a module of the access network device, or an internal apparatus of the access network device) provided in this embodiment of this application may perform the foregoing signal transmission method. Therefore, for technical effects that can be achieved by the access network device, refer to the foregoing method embodiments. Details are not described herein again.

It should be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built in a SoC (system on chip) or an ASIC, or may be an independent semiconductor chip. In addition to the core configured to perform operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When being a chip system, the communication apparatus may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or instructions are run on a communication apparatus, the communication apparatus is enabled to perform the method in any one of the foregoing method embodiments or any one of the implementations of the foregoing method embodiments.

Optionally, an embodiment of this application further provides a communication system. The communication system includes the first network device in the foregoing method embodiments and the terminal device in the foregoing method embodiments.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the spirit and scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. A transmission method, comprising:
sending a request message to an access network device, wherein the request message is used to request a processing capability for transmission of a target service;
receiving a resource response message from the access network device, wherein the resource response message indicates second data volume information, the second data volume information indicates a processing capability supported by the access network device for transmission of the target service within a first latency, and the processing capability is a data volume or a data transmission rate; and
sending data of the target service to the access network device based on the second data volume information.

2. The method according to claim 1, wherein the second data volume information is determined based on first data volume information, and the first data volume information indicates a processing capability for the target service requested to be transmitted within the first latency.

3. The method according to claim 1 or 2, wherein the first data volume information indicates a processing capability for the target service that a terminal device requests to transmit within the first latency.

4. The method according to claim 1 or 2, wherein the first data volume information indicates a processing capability for the target service that a core network device indicates to transmit within the first latency.

5. The method according to any one of claims 1 to 4, wherein the request message comprises the first data volume information and indication information of the first latency.

6. The method according to any one of claims 1 to 4, wherein the method further comprises:
receiving a first configuration message from the access network device, wherein the first configuration message comprises a first initial transmission rate or the first data volume information, and the first configuration message indicates to establish a data bearer of a quality of service QoS flow carrying the target service; or
receiving a second configuration message from the core network device, wherein the second configuration message comprises the first data volume information, and the second configuration message indicates to establish a QoS flow carrying the target service, wherein the first initial transmission rate indicates an initial rate at which the data of the target service is sent to the access network device.

7. The method according to claim 6, wherein
the resource response message comprises the second data volume information; or
the resource response message does not carry data volume information, and the second data volume information indicated by the resource response message is the first data volume information indicated by the first configuration message; or
the resource response message does not carry data volume information, and the second data volume information indicated by the resource response message is the first data volume information indicated by the second configuration message.

8. The method according to any one of claims 1 to 3, wherein the method further comprises:
sending a first request message to a core network device, wherein
the first request message comprises the first data volume information and indication information of the first latency, or the first request message comprises third data volume information and indication information of the first latency; and
the third data volume information is used by the access network device to determine the first data volume information, and the first request message is used to request to configure the QoS flow.

9. The method according to any one of claims 1 to 8, wherein the request message comprises estimated time of arrival information of the target service.

10. The method according to claim 9, wherein the estimated time of arrival information of the target service indicates that an estimated time of arrival of the target service is a time difference between a time at which the data actually arrives at an access stratum of the terminal device and a time at which the terminal device sends the request message.

11. The method according to any one of claims 1 to 10, wherein the resource response message comprises a second initial transmission rate, and the method further comprises:
determining a send window of an application transmission protocol of the data of the target service based on the second initial transmission rate.

12. The method according to any one of claims 1 to 11, wherein the method further comprises:
determining a parameter of the target service based on the second data volume information indicated by the resource response message.

13. The method according to claim 12, wherein sending the data of the target service to the access network device based on the second data volume information comprises:
when a data volume indicated by the second data volume information is greater than or equal to a first threshold, sending the data of the target service to the access network device based on the parameter of the target service.

14. A transmission method, comprising:
receiving a request message from a terminal device, wherein the request message is used to request a processing capability for transmission of a target service; and
sending a resource response message to the terminal device, wherein the resource response message indicates second data volume information, the second data volume information indicates a processing capability supported by an access network device for transmission of the target service within a first latency, and the processing capability is a data volume or a data transmission rate.

15. The method according to claim 14, wherein the second data volume information is determined based on first data volume information, and the first data volume information indicates a processing capability for the target service requested to be transmitted within the first latency.

16. The method according to claim 14 or 15, wherein the first data volume information indicates a processing capability for the target service that a terminal device requests to transmit within the first latency.

17. The method according to claim 14 or 15, wherein the first data volume information indicates a processing capability for the target service that a core network device indicates to transmit within the first latency.

18. The method according to any one of claims 14 to 17, wherein the request message comprises the first data volume information and indication information of the first latency.

19. The method according to any one of claims 14 to 17, wherein the method further comprises:
receiving the first data volume information and indication information of the first latency from the core network device, wherein the first data volume information is from the terminal device or a server; or
receiving third data volume information and indication information of the first latency from the core network device, and determining the first data volume information based on the third data volume information, wherein the third data volume information is from the terminal device or the server.

20. The method according to claim 19, wherein the method further comprises:
sending the first data volume information to the core network device.

21. The method according to claim 19 or 20, wherein the method further comprises:
sending a first configuration message to the terminal device, wherein the first configuration message comprises a first initial transmission rate or the first data volume information, the first configuration message indicates to establish a data bearer of a quality of service QoS flow carrying the target service, and the first initial transmission rate indicates an initial rate at which data of the target service is sent to the access network device.

22. The method according to claim 21, wherein the resource response message comprises the second data volume information; or the resource response message does not carry data volume information, and the second data volume information indicated by the resource response message is the first data volume information indicated by the first configuration message.

23. The method according to any one of claims 14 to 22, wherein the request message comprises estimated time of arrival information of the target service.

24. The method according to claim 23, wherein the estimated time of arrival information of the target service indicates that an estimated time of arrival of the target service is a time difference between a time at which the data actually arrives at an access stratum of the terminal device and a time at which the terminal device sends the request message.

25. The method according to any one of claims 14 to 24, wherein the resource response message comprises a second initial transmission rate, and the second initial transmission rate is used to determine a send window of an application transmission protocol of the data of the target service.

26. The method according to any one of claims 14 to 25, wherein the method further comprises:
receiving the data of the target service from the terminal device, wherein the data of the target service is sent by the terminal device based on a parameter of the target service when a data volume indicated by the second data volume information is greater than or equal to a first threshold, and the parameter of the target service is determined by the terminal device based on the second data volume information indicated by the resource response message.

27. A communication apparatus, comprising:
a transceiver module, configured to send a request message to an access network device, wherein the request message is used to request a processing capability for transmission of a target service, wherein
the transceiver module is further configured to receive a resource response message from the access network device, wherein the resource response message indicates second data volume information, the second data volume information indicates a processing capability supported by the access network device for transmission of the target service within a first latency, and
the processing capability is a data volume or a data transmission rate; and
a processing module, configured to send data of the target service to the access network device based on the second data volume information.

28. A communication apparatus, comprising:
a transceiver module, configured to receive a request message from a terminal device, wherein the request message is used to request a processing capability for transmission of a target service, wherein
the transceiver module is further configured to send a resource response message to the terminal device, wherein the resource response message indicates second data volume information, the second data volume information indicates a processing capability supported by an access network device for transmission of the target service within a first latency, and the processing capability is a data volume or a data transmission rate.

29. A communication apparatus, wherein the communication apparatus comprises a processor, and the processor is configured to enable, by running a computer program or instructions or by using a logic circuit, the communication apparatus to perform the method according to any one of claims 1 to 13 or the communication apparatus to perform the method according to any one of claims 14 to 26.

30. The apparatus according to claim 29, wherein the communication apparatus further comprises a communication interface, configured to input or output a signal.

31. A computer-readable storage medium, wherein the computer-readable storage medium stores computer instructions or a program, and when the computer instructions or the program is run on a computer, the communication apparatus is enabled to perform the method according to any one of claims 1 to 13, or the communication apparatus is enabled to perform the method according to any one of claims 14 to 26.

32. A communication system, wherein the communication system comprises the communication apparatuses according to claim 27 and claim 28.
